Europäisches Patentamt

European Patent Office

Office européen des brevets

(11) Publication number: **0 263 646 B1**

(12) **EUROPEAN PATENT SPECIFICATION**

(45) Date of publication of patent specification: 30.12.92

(51) Int. Cl.5: **G21C 17/022**, G21C 19/307, C23F 11/18

(21) Application number: 87308739.9

(22) Date of filing: 02.10.87

(54) Inhibiting radioactive substances from eluting into cooling water of a nuclear plant.

(30) Priority: 03.10.86 JP 234641/86

(43) Date of publication of application:
13.04.88 Bulletin 88/15

(45) Publication of the grant of the patent:
30.12.92 Bulletin 92/53

(84) Designated Contracting States:
**DE SE**

(56) References cited:

**JOURNAL OF THE BRITISH NUCLEAR SOCI-
ETY, vol. 23, no. 4, August 1984, pages
205-210; D. BRADBURY: "Conference report -
Third international conference on water
chemistry of nuclear reactor systems"**

**JOURNAL OF THE BRITISH NUCLEAR ENER-
GY SOCIETY, vol. 26, no. 2, April 1987, pages
65-73, London, GB; M.E. PICK: "Conference
report - 4th international conference on wa-
ter chemistry of nuclear reactor systems"**

(73) Proprietor: **HITACHI, LTD.**
**6, Kanda Surugadai 4-chome**
**Chiyoda-ku, Tokyo 101(JP)**

(72) Inventor: **Nagase, Makoto**
**6-13-6, Suwa-cho 4-chome**
**Hitachi-shi Ibaraki 316(JP)**
Inventor: **Karasawa, Hidetoshi**
**44-19, Taisei-cho**
**Katsuta-shi Ibaraki 312(JP)**
Inventor: **Asakura, Yamato**
**1178-17, Higashi Ishikawa-cho**
**Katsuta-shi Ibaraki 312(JP)**
Inventor: **Sakagami, Masaharu**
**419-6, Takaba**
**Katsuta-shi Ibaraki 312(JP)**
Inventor: **Uchida, Shunsuke**
**10-52, Nishi Narusawa-cho 1-chome**
**Hitachi-shi Ibaraki 316(JP)**
Inventor: **Ohsumi, Katsumi**
**21-10, Hanayama-cho 2-chome,**
**Hitachi-shi Ibaraki 316(JP)**
Inventor: **Sawa, Toshio**
**11-3, Mikanohara-cho 2-chome,**
**Hitachi-shi Ibaraki 316(JP)**

Rank Xerox (UK) Business Services

PATENT ABSTRACTS OF JAPAN, vol. 10, no. 126 (M-477)[2183], 10th May 1986 & JP-A-60 253 796 (MITSUBISHI JUKOGYO K.K.) 14-12-1985

CHEMICAL ABSTRACTS, vol. 100, no. 8, 20th February 1984, page 238, abstract no. 55456s, Columbus, Ohio, US & JP-A-58 171 578 (NIHON BOSHOKU KOGYO CO., LTD) 08-10-1983

(74) Representative: **Calderbank, Thomas Roger et al**
**MEWBURN ELLIS & CO. 2/3 Cursitor Street London EC4A 1BO(GB)**

**Description**

The present invention relates to the inhibition of elution of radioactive substances into the cooling water of a nuclear plant such as a boiling water reactor (BWR) or an advanced converter. It relates to a method of inhibition of elution, an apparatus for inhibiting elution, and to a plant having such an apparatus.

One method of inhibiting radioactive substances from eluting into the cooling water in the boiling water reactor has been disclosed in Japanese Patent Laid-Open No. 79194/1986. In that disclosure when a boiling water reactor was operated, the Fe/Ni molar concentration ratio in the boiling water reactor was controlled to be from 2 to 8. However, no satisfactory effects were produced.

This method relied on the observation from model analysis that the minimum surface dosage in the primary system of the plant is obtained after about 3000 hours from the commencement of operation of the boiling water reactor. Therefore, the method proposed that the control of the Fe/Ni molar concentration ratio should always be carried out after about 3000 hours from the beginning of the operation of the boiling water reactor.

In another known method of inhibiting radioactive substances from eluting into the cooling water of the boiling water reactor, the iron concentration in the cooling water was gradually increased with the concentration of radioactive cobalt ($^{58}$Co) ions in the cooling water as an index, since nickel ions brought into the nuclear reactor from the feed water system become radioactive cobalt ($^{58}$Co) ions.

In such a method, however, no consideration was given to iron crud, for example $\alpha$-$Fe_2O_3$, on the fuel cladding surfaces, nor to the covering ratio at which the outer surface of the fuel rod (including the fuel pellets therein or the outer surface of the fuel cladding tube) was covered with iron crud. That covering ratio affects the reaction of the iron crud with nickel and cobalt. Note that when the corrosion substance formed on the cladding tube is iron, cobalt or nickel the radioactive substance produced is $^{58}$Co, $^{60}$Co or $^{54}$Mn.

Furthermore, during the initial stage of the operation cycle in business operation of the plant or when the nickel ion concentration has dropped significantly, the index, i.e., control of the Fe/Ni molar concentration ratio is not effective for decreasing the $^{58}$Co ion and $^{60}$Co ion concentrations in the cooling water. Also, when an attempt is made to increase the Fe/Ni molar concentration ratio, an excess amount of iron crud may be introduced, and then $5^4$Mn ions formed by the reaction of $^{54}$Fe(n,p) often cause the surface dosage in the primary system to increase.

When the Fe/Ni molar concentration ratio on the fuel cladding surface increases, the activity of $^{54}$Mn crud or $^{60}$Co crud increases qualitatively and $^{60}$Co ion or $^{58}$Co ion activity decreases qualitatively.

The present invention seeks to provide a method of inhibiting radioactive substances from eluting into the cooling water of a nuclear plant in which the iron concentration in the cooling water ca be controlled so that the amount of sedimenting crud-like (insoluble) radioactive substances is as small as possible.

In the present invention, the word "crud" is defined as a particulate substance which does not pass through a myriapore filter having 0.45 $\mu$m pores. The word "ion" is defined as a substance which passes through the myriapore filter having 0.45 $\mu$m pore.

A method according to the present invention is applied when a new fuel cladding, which is unused, which is loaded into the nuclear reactor for the first time and which has no material adhered on the fuel cladding surfaces, is loaded into the nuclear reactor. By e.g. nuclear heating iron (preferably from a source of iron ions) is injected into the cooling water of the plant in order to form an iron oxide layer on the fuel cladding surfaces. When iron oxide layer has been formed on the fuel cladding surfaces with a covering rate of 100%, the amount of iron injected is lowered so that the Fe/Ni molar concentration ratio in the cooling water is in a range of from about 2 to 10.

Iron ions or iron crud is injected during the preoperation to form as iron oxide layer on the fuel cladding surface with a covering rate 100%. The iron concentration in the cooling water may then be controlled by controlling the flow rate of the cooling water through a condensed water by-pass line, or by controlling an iron electrolyzing current.

Monitoring the amounts of iron, nickel and cobalt in the cooling water of e.g. a boiling water reactor makes it possible to learn the amounts of corrosion products such as iron crud, nickel ion and cobalt ion that are brought into the nuclear reactor within the period of time in which measurement is taken. This serves as an input for calculating the amount of material adhering to the fuel cladding surfaces.

Furthermore, by estimating the amount of material adhering to the fuel cladding surface by calculation and controlling the amount thereof, there is efficient reaction of the iron crud that builds up on the fuel cladding surface with nickel and cobalt. This permits the $^{58}$Co ion and $^{60}$Co ion concentrations in the cooling water to be reduced and inhibits the amount of undesirable radioactive crud such as $^{54}$Mn. The amount of the iron crud adhered on the fuel cladding surface can be decreased by controlling the ion concentration of the iron crud in the cooling water.

3

Thus the present invention permits the iron concentration in the cooling water to be controlled to decrease the $^{58}$Co ion and $^{60}$Co ion concentrations in the cooling water. Also the surface dosage in the primary system can be decreased when regular checks are to be made, which decreased the surface dosage in the primary system to which a worker may be exposed.

Furthermore, according to the present invention, the $^{58}$Co ion and $^{60}$Co ion concentrations in the cooling water may be decreased without significantly increasing the concentration of precipitating radioactive crud such as $^{60}$CoFe$_2$O$_4$ or $^{58}$CoFe$_2$O$_4$ or $^{54}$MnFe$_2$O$_4$.

The above discussion of the present invention has been concerned with the method aspect of the present invention. According to another aspect of the invention there is provided an apparatus for inhibiting radioactive substances from eluting into the cooling water of a nuclear plant, having:

means for detecting the amount of iron and the amount of nickel in the cooling water of the plant,

means for evaluating the total amount of iron adhered on the fuel cladding surfaces of the plant based upon the amount of iron in the cooling water, and

means for injecting iron into the cooling water, the iron injection means being controlled on the basis of signals representing the amounts of iron and nickel in the cooling water and the amount of iron adhered to the fuel cladding surfaces.

Such an apparatus may then be based in a nuclear plant.

Embodiments of the invention will now be described in detail, by way of example, with reference to the accompanying drawings, in which:

Fig. 1 is a diagram showing a feed water system in a boiling water reactor according to one embodiment of the present invention;

Fig. 2 is a diagram which schematically illustrates a fuel cladding surface on an enlarged scale;

Fig. 3 is a flow chart which illustrates the control of iron in the cooling water;

Fig. 4 is a diagram which compares the control of iron in the cooling water according to the present invention with that in a conventional method;

Fig. 5 is a diagram which quantitatively illustrates effects according to one embodiment of the present invention;

Fig. 6 is a diagram illustrating the structure of a nuclear plant in which the present invention is used; and

Fig. 7 is a diagram illustrating the structure of another nuclear plant in which the present invention is used.

## Embodiment 1

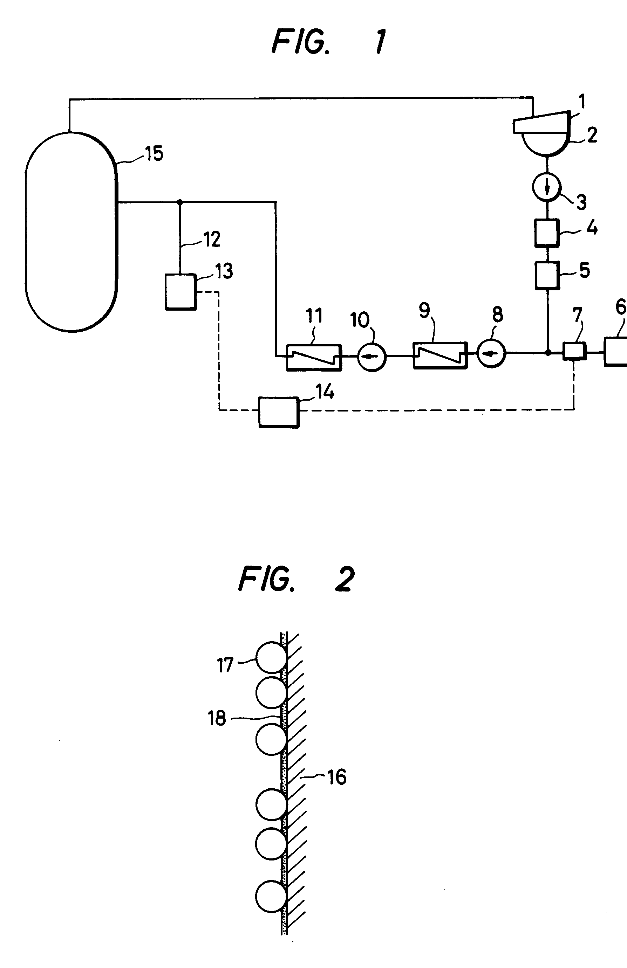

A first embodiment of the present invention will now be described with reference to Fig. 1, which illustrates a feed water system of a boiling-water reactor. In that reactor, steam generated from a steam turbine 1 is fed to a condenser 2. The condensed water from the condenser 2 contains large amounts of corrosion products.

However, most of the corrosion products such as iron, cobalt and nickel are removed as the condensed water that is pumped by a pump 3 passes through a condensed water prefilter 4 and a condensed water desalting unit 5. The purified water passes through a water supply pump 8, a low-pressure feed water heater 9, a booster pump 10, a high-pressure feed water heater 11, and is guided to a pressurized vessel 15 of the nuclear reactor.

The corrosion products entering the pressurized vessel 15 of the reactor consist of those that were not removed by the condensed water desalting unit 5, and also nickel and other substances which are generated chiefly by the corrosion of the high-pressure feed water heater 11. The amount of corrosion products can be detected by measuring the sampling water using a concentration measuring device 13 for measuring iron concentration, nickel concentration, and cobalt concentration, with the sampling water being obtained through a sampling line 12.

After a new fuel rod is loaded into the nuclear reactor, a pre-operation is carried out in the boiling water reactor. By nuclear heating iron, in the form of iron crud or iron ions, is injected into the cooling water in order to form an iron oxide layer on the fuel cladding surface. The measured concentration value is fed to a controller 14 to estimate the amount of substance such as the iron crud adhering to the fuel cladding surface, a valve 7 is then adjusted so that the iron is injected from an iron injecting device 6 into the cooling water at an optimum iron concentration.

The reasons for estimating and controlling the adhering amount of material substance on the fuel cladding surface will be described in conjunction with Fig. 2. That figure schematically illustrates a fuel cladding surface 16 on an enlarged scale and represents the situation where a small amount of iron is adhered on the fuel cladding surface 16. The iron adheres to the fuel cladding surface 16 mostly in the form of iron crud particles 17.

If the fuel cladding surface 16 is not sufficiently covered with iron crud particles 17, a layer 18 of NiO or CoO is formed on the fuel cladding surface 16. Such a layer 18 of NiO or CoO is the main factor that raises the $^{58}$Co ion and $^{60}$Co ion concentrations in the cooling water.

Therefore, a fuel cladding tube or the fuel rod that is covered with the iron crud particles 17 to a covering rate of 100% inhibits the formation of such a NiO layer 18 or a CoO layer 18. When excessive amounts of iron crud particles 17 adhere to the fuel cladding surface 16, on the other hand, the iron crud concentration in the cooling water rises as the iron crud particles 17 may peel off easily.

The iron crud particles 17 then serve as carriers, and the precipitating radioactive crud such as [60]$CoFe_2O_4$, [58]$CoFe_2O_4$ or [54]$MnFe_2O_4$ results in an increase in the surface dosage in the primary system of pedestal under the pressurized vessel 15 of the nuclear reactor.

Therefore, the amount of the iron crud particles 17 adhered on the fuel cladding surface 16 should desirably be as small as possible but sufficient to cover the surface of the fuel cladding tube or the fuel rod. This is also sufficient to react with nickel or cobalt to form $NiFe_2O_4$ or $CeFe_2O_4$.

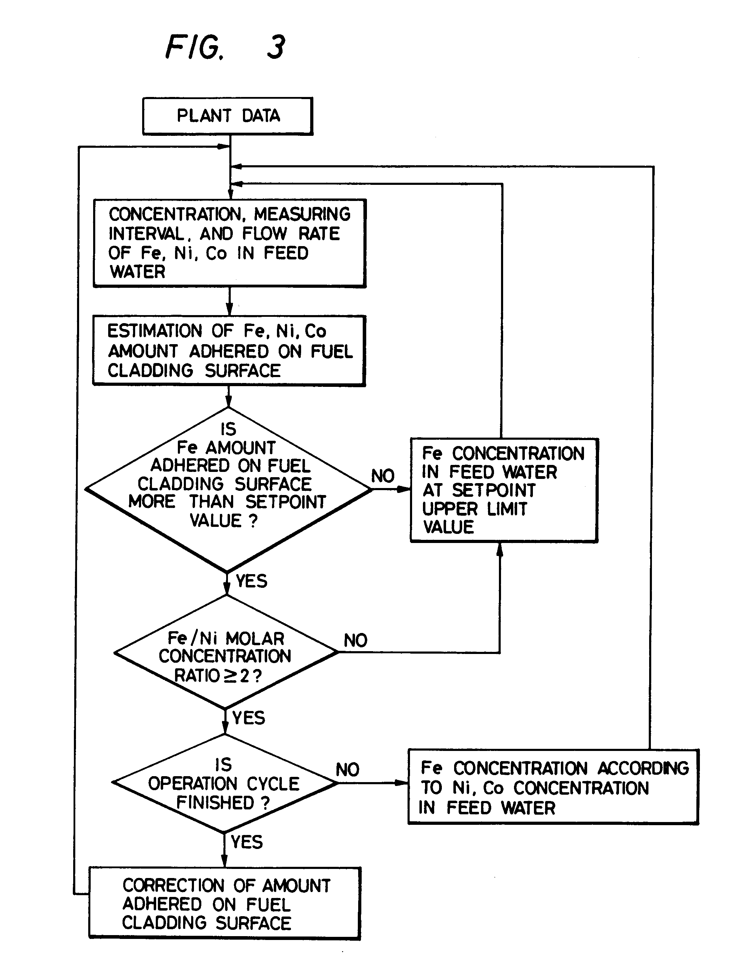

The amount of the iron adhered on the fuel cladding surface 16 can be controlled by controlling the amount of iron brought in by the feed water, i.e. by controlling the iron concentration in the cooling water. The control method will now be explained in conjunction with Fig. 3 which is a flow chart illustrating the control of iron concentration in the feed water.

In Fig. 3, the concentrations of iron, nickel and cobalt in the cooling water are denoted by CFe, CNi and CCo, the measuring interval is denoted by t, the flow rate of the cooling water is denoted by F, and the initial amounts of iron, nickel and cobalt which adhere onto the fuel cladding surface are denoted by MFe, MNi and MCo.

Then, the amounts MFe′, MNi′ and MCo′ of iron, nickel and cobalt which adhere during the measuring interval onto the fuel cladding surface can be estimated as follows:

MFe′ = MFe + aCFeFt - ʃcMFet
MNi′ = MNi + bCNiFt - ʃiMFet
MCo′ = MCo + cCNiFt - ʃiMCot

where a, b and c are correction coefficients for estimating the amounts that adhere during the measuring interval to the fuel cladding surface from the concentration of the feed water, and where a has a value of from 0.7 to 1.0, and b and c have values of from 0.6 to 1.2 that vary depending upon the constituent materials of the nuclear plant. Symbols ʃc and ʃi correspond to rate coefficients of decrease due to peeling off or elution of crud or ions from the fuel cladding surface.

A setpoint value d (in g) for the amount of iron adhered to the fuel cladding surface is found from the following equation:

$$d = 1 \times 10^{-4} e \times S \times 5.2 \times \frac{111.6}{159.6} = 3.6 \times 10^{-4} \times e \times S$$

where the iron crud layer has a thickness e (in $\mu$m) of from 0.2 to 1.0 $\mu$m, so that the fuel cladding surface is sufficiently covered with iron, the total outer surface area of the fuel cladding tube is denoted by S (in cm$^2$) and the hematite ($Fe_2O_3$) has a density of 5.2 g/cm$^3$.

Here, if the total outer surface area of the fuel cladding tube S = $7 \times 10^7$ cm and the thickness of the iron crud layer e = 1.0 $\mu$m, then the amount of the iron adhered to the fuel cladding surface at the setpoint value d is about 25 Kg. When the amount of iron MFe does not reach the setpoint value d determined as described above, the iron concentration in the cooling water is adjusted to be from about 0.3 to 1 ppb so that the iron concentration amount MFe exceeds the setpoint value d as quickly as possible.

However, if the iron concentration in the cooling water is increased so as to exceed 1 ppb, iron crud may build up on parts other than the fuel cladding tube. When the relationship MFe > d is satisfied, the relationship MFe > 2 (MNi + MCo) is maintained by controlling the iron concentration in the cooling water, so that an excessive amount of iron will not be brought into the nuclear reactor.

The iron concentration in the cooling water can be measured by a method in which the cooling water is permitted to pass through a myriapore filter. The nickel and cobalt concentrations in the cooling water can be measured by a method using ion exchange resin to trap and condense the nickel and cobalt followed by analysis with an atomic absorption method. Alternatively the nickel and cobalt can be measured by a method which uses a conductivity measuring instrument in an on-line manner. When measured batchwise, the results of measurement must be input to the controller 14 in an off-line manner.

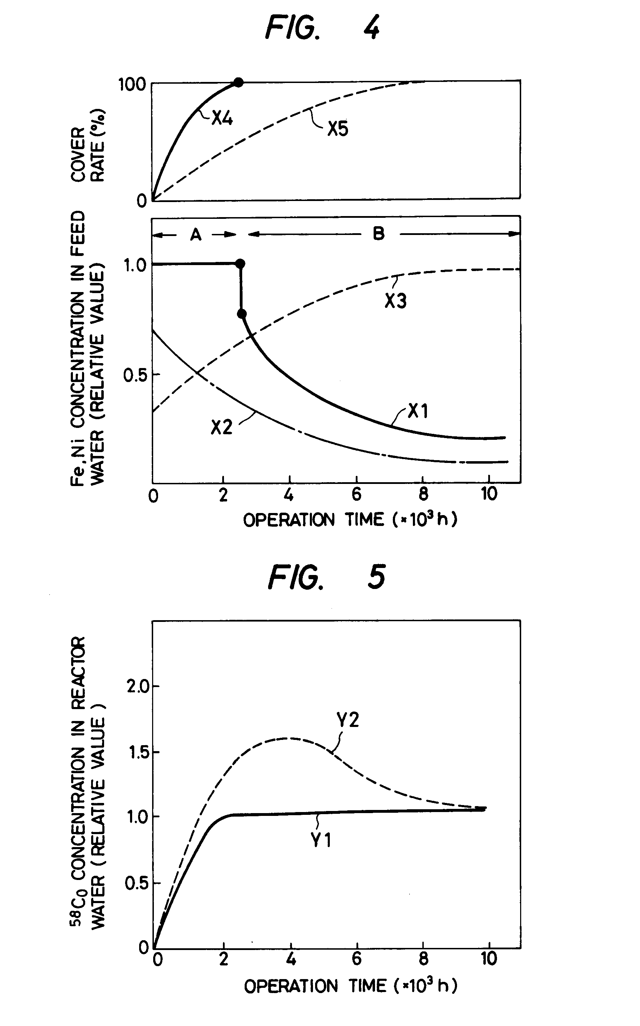

Fig. 4 shows the change of iron concentration X1 in the cooling water with the passage of time using the present invention in comparison with the iron concentration X3, X5 using a conventional method.

According to that conventional method, the iron concentration in the cooling water is gradually increased with the radioactive cobalt ($^{58}$Co) ion concentration in the cooling water as an index. Nickel ions are brought into the nuclear reactor from the feed water system and become radioactive cobalt ($^{58}$Co) ions.

According to one embodiment of the present invention, on the other hand, the index consists of the amount of iron adhering to the fuel cladding surface, which amount is calculated from the iron concentration in the cooling water and from the time of operation of the reactor.

In Fig. 4, furthermore, the covering ratio (%) X4 found from the amount (W) of the iron adhered on the fuel cladding surface and a setpoint amount (W$_0$) of the iron adhering to the fuel cladding surface in accordance with the following equation, is indicated as an index, i.e.,

$$\text{covering ratio (\%)} = \frac{\text{Amount of iron adhered onto the fuel cladding surface}}{\text{Setpoint amount of iron adhered onto the fuel cladding surface}} \times 100$$

Thus, according to one embodiment of the present invention, the concentration (C) of iron ion or iron crud in the cooling water is measured, a covering ratio (%) of an iron oxide film or an iron oxide layer on the fuel cladding surface is found based upon the heat flux (Q) of the fuel rod or the fuel cladding tube, latent heat (L) of vaporization, the operation time (t), and a deposition rate coefficient (K) in accordance with the following equations (i) and (ii):

$$W = K \cdot Q \cdot C \cdot t/L \qquad \text{(i)}$$
$$\text{covering ratio (\%)} = (W/W_0) \times 100 \qquad \text{(ii)}$$

The formation of the layer of the iron oxide on the fuel cladding surface is confirmed based upon the covering ratio of 100%, and the oxidation processing is finished.

When the covering ratio is less than 100% in the present invention, the iron concentration in the cooling water is preferably controlled to remain constant at the maximum concentration permitted under the conditions of operation of the nuclear plant (corresponds to a period A in Fig. 4).

Desirably, the Fe/Ni molar concentration ratio of the cooling water is controlled to become about 2, which is necessary for forming $NiFe_2O_4$, from a moment when the covering ratio has reached at 100%.

Fig. 5 is a diagram in which the change of $^{58}$Co ion concentration in the cooling water with the passage of time is found analytically when the iron concentration in the cooling water is controlled according to the two kinds of patterns shown in Fig. 4.

According to the conventional method Y2, as will be obvious from Fig. 5, there is overshoot in the $^{58}$Co ion concentration. According to embodiment Y1 of the present invention, on the other hand, there is no overshoot in the $^{58}$Co ion concentration. Consequently, therefore, the smallest amounts of radioactive substances build up on the inner surfaces of conduits about the reactor core.

According to this embodiment, the Fe/Ni molar concentration ratio in the cooling water is adjusted to be set from about 2 to 10 after the layer of iron oxide has been formed under the operation condition of the nuclear plant (corresponds to a period B in Fig. 4). This is because when the Fe/Ni molar concentration ratio is greater than 2, the nickel ions and cobalt ions adhered on the fuel cladding surface can exist in the form of a compound oxide at a rate of 1 to 2 with respect to the iron, i.e. can exist in the form of $NiFe_2O_4$ and $CoFe_2O_4$.

When the Fe/Ni molar concentration ratio is smaller than 2, however, an excessive amount of nickel ions and cobalt ions are present with respect to iron, so that the nickel ions and cobalt ions tend to exist as sole oxides, i.e., as NiO or CoO.

When the Fe/Ni molar concentration ratio is zero, the nickel ions and cobalt ions all adhere in the form of NiO and CoO on the fuel cladding surface. When the Fe/Ni molar concentration ratio is excessively high, on the other hand, a large amount of iron crud adheres on the fuel cladding surface after the nuclear reactor is operated for extended periods of time, and the peeling of the radioactive crud ($^{60}CoFe_2O4$, $^{58}CoFe_2O_4$) formed on the fuel cladding surface can no longer be neglected.

The same effects are obtained even when the Fe/Ni molar concentration ratio is controlled to become greater than 2. In this case, however, an excess amount of iron is adhered on the fuel cladding surface, so that crud-like (insoluble) radioactive cobalt is formed at an increased rate.

According to one embodiment of the present invention, when the iron oxide layer is formed on the fuel cladding surface at the covering rate of 100%, the Fe/Ni molar concentration ratio should preferably be set to be from about 4 to 6.

Embodiment 2

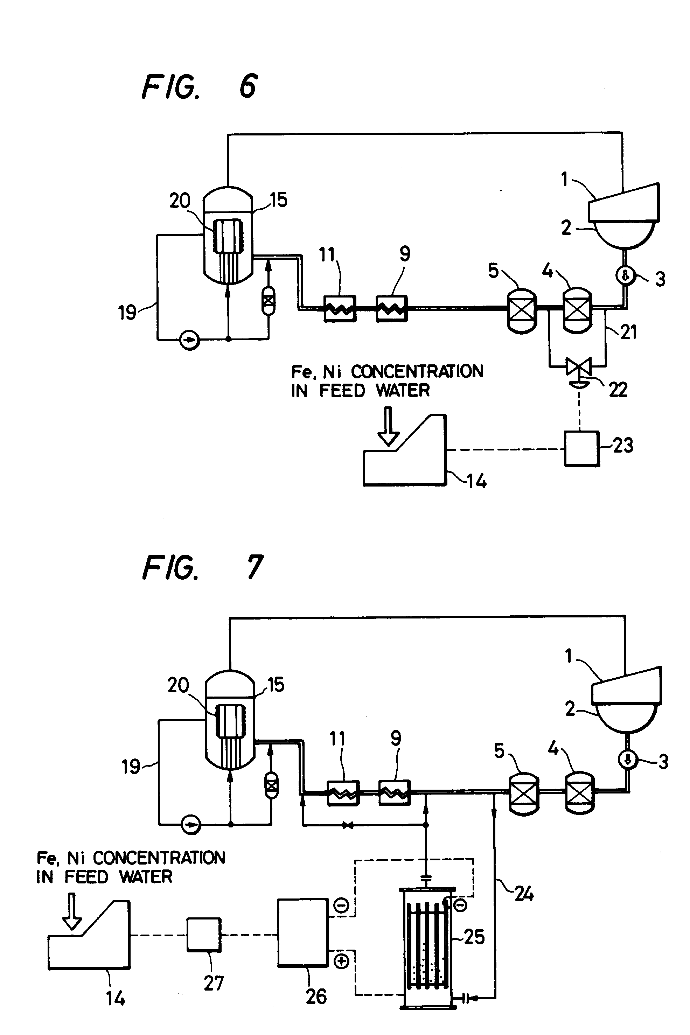

Fig. 6 illustrates a control system for use when the present invention is adapted to a practical nuclear plant. The plant of Fig. 6 is generally similar to that of Fig. 1, and corresponding parts are indicated by the same reference numerals. In Fig. 6, there is also shown a condensed water by-pass line 21, a by-pass flow rate control valve 22, and a valve open/close controller 23. The condensed water by-pass line 21 is formed between the pump 3 and the condensed water desalting unit 5 by-passing the condensed water prefilter 4. The by-pass flow rate control valve 22 is provided on the condensed water by-pass line 21, and the valve open/close controller 23 is connected to the by-pass flow rate valve 22. Also shown in Fig. 6 are the reactor 20 and a feed-back line 19.

In response to a control signal from a device 14 which evaluates the amount of iron adhering to the fuel cladding surface, the valve open/close controller 23 operates to change the amount of opening of the by-pass flow rate control valve 22, so that the flow rate of the cooling water through the by-pass line 21 changes.

As the flow rate of the cooling water through the condensed water by-pass line 21 increases, the efficiency of removal of the iron crud decreases through the condensed water pre-filter 4 and the iron concentration in the cooling water increases.

As the flow rate of the cooling water through the condensed water by-pass line 21 decreases, on the other hand, the iron concentration of the cooling water decreases. By controlling the flow rate of the cooling water through the condensed water by-pass line 21, therefore, the iron concentration in the cooling water can be controlled according to the optimum pattern that is shown in Fig. 4.

Embodiment 3

Fig. 7 illustrates another control system for use when the present invention is adapted to a practical nuclear plant. The plant of Fig. 7 is generally similar to that of Fig. 6, and corresponding parts are indicated by the same reference numerals. In Fig. 7, there is shown a feed water by-pass line 24, an iron electrolyzing device 25, a DC power source 26 for electrolysis, and an electrolyzing current controller 27.

The feed water by-pass line 24 is formed between the condensed water desalting unit 5 and the low-pressure feed water heater 9. The iron electrolyzing device 25 is provided downstream of the feed water by-pass line 24. The DC power source 26 for electrolysis is connected to the iron electrolyzing device 25. The electrolyzing current controller 27 is connected to the DC power source 26.

In response to a control signal from the device 14 which evaluates the amount of the iron concentration adhering to the fuel cladding surface, the electrolyzing current controller 27 operates to change the electrolyzing current of the iron electrolyzing device 25. The amount of the iron ions generated in the iron electrolyzing device 25 increases with the increase in the electrolyzing current, so that the iron concentration in the cooling water increases.

The amount of the iron ions decreases with the decrease in the electrolyzing current, so that the iron concentration in the cooling water may be decreased. By controlling the iron electrolyzing current, therefore, the iron concentration in the cooling water can be controlled in accordance with the optimum pattern that is shown in Fig. 4.

Modified Embodiments

In the embodiments of the present invention discussed above, the total amount of iron that is necessary to cover completely the whole fuel cladding surface with the iron crud was used as an index for controlling the iron concentration in the cooling water. It is, however, possible to use other index which represents the adhesion of the iron crud formed on the fuel cladding surface. For example, it is allowable to use the total amount of the iron crud adhered on the fuel cladding surface that is obtained from experience in operating the nuclear plant.

The same effects can also be obtained when the adhesion of the iron crud is observed visually through a periscope, or signals from a sensor that measure physical quantities reflecting the amount of the iron crud adhering to the fuel cladding surface, are used for determining whether the amount of the iron crud adhering to the fuel cladding surface has reached a predetermined or present value or not on the flow chart of Fig. 3. In general, however, it is difficult and lacks practicability to bring into the nuclear reactor the devices for carrying out the observation and the measurement.

**Claims**

1. A method of inhibiting radioactive substances from eluting into the cooling water of a nuclear plant, in which, after a new fuel rod is loaded into a nuclear reactor of the plant, iron is injected into the cooling water of the plant to form an iron oxide layer on the fuel cladding surfaces; wherein, after the iron oxide layer has a covering rate of 100%, the iron injection rate is controlled so that the Fe/Ni molar concentration ratio in the cooling water is in the range approximately 2 to 10.

2. A method according to claim 1, wherein the iron oxide layer is formed by the injection of iron ions.

3. A method accoding to claim 1, wherein the iron oxide layer is formed by the injection of iron crud.

4. A method according to any one of the preceding claims, wherein before said iron oxide layer covers the fuel cladding surfaces with a covering rate of 100%, the iron concentration in the cooling water is controlled at a constant value which is the maximum concentration permitted within the operation conditions of the nuclear plant.

5. A method according to claim 4 wherein the Fe/Ni molar concentration ratio is controlled to be about 2 immediately after the iron oxide layer covers the fuel cladding surface at a covering rate of 100%.

6. A method according to any one of the preceding claims, wherein:
   the concentration of the iron in the cooling water is measured;
   a covering ratio (%) of said iron oxide layer on said fuel cladding surfaces is found from the following equations (i) and (ii), where $K$ is a deposition rate coefficient, $Q$ the heat flux of a fuel rod, $C$ the iron concentration, $t$ the operation time, $L$ the latent heat of vaporization, $W$ the amount of iron adhered on the fuel cladding surface, and $W_0$ a setpoint amount of iron adhered on the fuel cladding surface,

   $$W = K \cdot Q \cdot C \cdot t / L \quad \text{(i)}$$
   $$\text{covering ratio (\%)} = (W/W_0) \times 100 \quad \text{(ii)},$$

   and the formation of the iron oxide layer on the fuel cladding surface is confirmed on the basis of the covering ratio, and an oxidation processing is completed when the covering rate of the iron oxide layer reaches 100%.

7. A method according to any one of the preceding claims, wherein the Fe/Ni molar concentration ratio is controlled in the range about 4 to 6.

8. A method according to any one of the preceding claims, wherein the iron concentration in the cooling water is controlled by controlling the flow rate of the cooling water through a condensed water by-pass line.

9. A method according to any one of claims 1 to 7, wherein the iron concentration in the cooling water is controlled by controlling an iron electrolyzing current.

10. A method according to any one of the preceding claims, wherein the total amount of the iron adhering to said fuel cladding surface is predetermined from the previous operation of the nuclear plant.

11. A method according to any one of claims 1 to 9, wherein visual observation of the adhesion of the iron is used to determined the amount of the iron adhering to the fuel cladding surface.

12. A method according to any one of claims 1 to 9, wherein a signal from a sensor that measures physical quantities reflecting the amount of the iron adhering on the fuel cladding surface is used to determine the amount of the iron adhering to the fuel cladding surface.

13. An apparatus for inhibiting radioactive substances from eluting into the cooling water of a nuclear plant, having:
    means (13) for detecting the amount of iron and the amount of nickel in the cooling water of the plant,
    means (14) for evaluating the total amount of iron adhered on the fuel cladding surfaces of the plant based upon the amount of iron in the cooling water, and
    means (6,7) for injecting iron into the cooling water, the iron injection means being controlled on the basis of signals representing the amounts of iron and nickel in the cooling water and the amount of iron adhered to the fuel cladding surfaces.

14. An apparatus according to claim 13, wherein the detecting means (13) is downstream of the injecting means (6,7) in the flow path of the cooling water in the reactor.

15. Use of an apparatus according to claim 13 or claim 14 in a nuclear plant, the nuclear plant including:
    a nuclear reactor, a steam turbine (1) a condensor (2) a condensed water purifying unit (4,5), a feed water heater (9,11), and a recirculation system (19),
    wherein the detecting means (13) is downstream of the feed water heater (9,11), and the injecting means (6,7) is downstream of the water purifying unit (4,5).

16. Use according to claim 15, wherein the condensed water purifying unit comprises a condensed water prefilter (4) and a condensed water desalting unit (5), there is a pump (3) between the condensor (2) and the pre-filter (4), and there is a condensed water by-pass line (21) between the pump (3) and the condensed water desalting unit (5) by-passing the condensed water prefilter (4), with a by-pass flow rate control valve (22) being provided in the condensed water by-pass line (21), and a valve open/close controller (23) being connected to the by-pass flow rate valve (22),
    wherein the controller (23) is adapted to be controlled by the evaluating means (14) to control the amount of opening of the valve (22) and hence to control the flow rate of cooling water through the by-pass line (21).

17. Use according to claim 15, having a feed water by-pass line (24) between the condensed water purifying unit (4) and the feed water heater (9), and iron electrolyzing device (25) downstream of the feed water by-pass line (24), a power source (26) for electrolysis connected to the iron electrolyzing device (25), and an electrolyzing current controller (27) connected to the power source (26), whereby in response to a control signal from the evaluating means (14), the electrolyzing current controller (27) is adapted to operate to control the electrolyzing current of the iron electrolyzing device (25).

**Patentansprüche**

1. Verfahren zum Verhindern des Abgebens radioaktiver Substanzen in das Kühlwasser eines Kernkraftwerks, bei dem, nachdem ein neuer Brennstoffstab in einen Kernreaktor der Anlage geladen wurde, Eisen in das Kühlwasser der Anlage injiziert wird, um eine Eisenoxidschicht auf den Brennstoffabdeckflächen auszubilden; wobei, nachdem die Eisenoxidschicht einen Bedeckungsgrad von 100 % aufweist, die Eiseninjektionsrate so eingestellt wird, daß das molare Fe/Ni-Konzentrationsverhältnis im Kühlwasser im Bereich von näherungsweise 2 bis 10 liegt.

2. Verfahren nach Anspruch 1, bei dem die Eisenoxidschicht durch die Injektion von Eisenionen gebildet wird.

3. Verfahren nach Anspruch 1, bei dem die Eisenoxidschicht durch die Injektion von Eisenverunreinigungen gebildet wird.

**4.** Verfahren nach einem der vorstehenden Ansprüche, **dadurch gekennzeichnet,** daß, bevor die Eisenoxidschicht die gesamte Brennstoffabdeckfläche mit einem Bedeckungsgrad von 100 % abdeckt, die Eisenkonzentration im Kühlwasser auf einen konstanten Wert eingestellt wird, der der Maximalkonzentration entspricht, die unter den Betriebsbedingungen des Kernkraftwerks zulässig ist.

**5.** Verfahren nach Anspruch 4, bei dem das molare Fe/Ni-Konzentrationsverhältnis so eingestellt wird, daß es ungefähr 2 ist, unmittelbar nachdem die Eisenoxidschicht die gesamte Brennstoffabdeckfläche mit einem Bedeckungsgrad von 100 % abdeckt.

**6.** Verfahren nach einem der vorstehenden Ansprüche, bei dem:
- die Konzentration von Eisen im Kühlwasser gemessen wird;
- das Bedeckungsverhältnis (%) der Eisenoxidschicht auf den Brennstoffabdeckflächen durch die folgenden Gleichungen (i) und (ii) ermittelt wird, wobei K ein Abscheidungsgeschwindigkeitskoeffizient, Q der Wärmefluß eines Brennstoffstabs, C die Eisenkonzentration, t die Betriebszeit, L die latente Wärme beim Verdampfen, W die Menge von Eisen, das an der Brennstoffabdeckfläche anhaftet, und $W_O$ ein Sollwert für an der Brennstoffabdeckfläche anhaftendes Eisen ist:

$$W = k \cdot Q \cdot C \cdot t/L \qquad (i)$$
$$\text{Abdeckverhältnis } (\%) = (W/W_0) \times 100 \qquad (ii),$$

- und die Ausbildung der Eisenoxidschicht auf der Brennstoffabdeckfläche auf Grundlage des Bedeckungsverhältnisses bestätigt wird und die Oxidationsverarbeitung beendigt wird, wenn der Bedeckungsgrad der Eisenoxidschicht 100 % erreicht.

**7.** Verfahren gemäß einem der vorstehenden Ansprüche, bei dem das molare Fe/Ni-Konzentrationsverhältnis im Bereich zwischen etwa 4 und 6 eingestellt wird.

**8.** Verfahren nach einem der vorstehenden Ansprüche, bei dem die Eisenkonzentration im Kühlwasser dadurch eingestellt wird, daß die Fließrate des Kühlwassers durch eine Kühlwasser-Bypassleitung eingestellt wird.

**9.** Verfahren nach einem der Ansprüche 1 bis 7, bei dem die Eisenkonzentration im Kühlwasser dadurch eingestellt wird, daß ein Eisenelektrolysierstrom eingestellt wird.

**10.** Verfahren nach einem der vorstehenden Ansprüche, bei dem die Gesamtmenge an Eisen, das an der Brennstoffabdeckfläche anhaftet, aus dem vorangegangenen Betrieb des Kernkraftwerks bestimmt wird.

**11.** Verfahren nach einem der Ansprüche 1 bis 10, bei dem eine visuelle Beobachtung des Anhaftens von Eisen verwendet wird, um die Menge an Eisen zu bestimmen, die an der Brennstoffabdeckfläche anhaftet.

**12.** Verfahren nach einem der Ansprüche 1 bis 9, bei dem ein Signal von einem Sensor, der eine physikalische Größe mißt, die die Menge an Eisen wiedergibt, die an der Brennstoffabdeckfläche anhaftet, dazu verwendet wird, die Menge an Eisen zu bestimmen, die an der Brennstoffabdeckfläche anhaftet.

**13.** Gerät zum Verhindern des Abgebens radioaktiver Substanzen in das Kühlwasser eines Kernkraftwerks, mit:
- einer Einrichtung (13) zum Ermitteln der Menge an Eisen und der Menge an Nickel im Kühlwasser der Anlage;
- einer Einrichtung (14) zum Ermitteln der Gesamtmenge an Eisen, das an Brennstoffabdeckflächen in der Anlage anhaftet, aufgrund der Menge an Eisen im Kühlwasser; und
- einer Einrichtung (6, 7) zum Injizieren von Eisen in das Kühlwasser, welche Eiseninjiziereinrichtung auf Grundlage der die Mengen an Eisen und Nickel im Kühlwasser und die Menge an Eisen, das an den Brennstoffabdeckflächen anhaftet, repräsentierenden Signale gesteuert wird.

**14.** Gerät nach Anspruch 13, bei dem die Ermittlungseinrichtung (13) stromabwärts in bezug auf die Injiziereinrichtung (6, 7) im Fließweg des Kühlwassers im Reaktor liegt.

**15.** Verwendung einer Vorrichtung gemäß Anspruch 13 oder Anspruch 14 in einem Kernkraftwerk, welches Kernkraftwerk folgendes aufweist:
- einen Kernreaktor, eine Dampfturbine (1), einen Kondensator (2), eine Reinigungseinheit (4, 5) für kondensiertes Wasser, einen Speisewasserheizer (9, 10) und ein Rezirkulationssystem (19);
- wobei die Ermittlungseinrichtung (13) stromabwärts in bezug auf den Speisewasserheizer (9, 11) liegt und die Injiziereinrichtung (6, 7) stromabwärts in bezug auf die Wasserreinigungseinheit (4, 5) liegt.

**16.** Verwendung nach Anspruch 15, bei der die Reinigungseinheit für kondensiertes Wasser ein Vorfilter (4) für kondensiertes Wasser und eine Entsalzungseinheit (5) für kondensiertes Wasser aufweist, eine Pumpe (3) zwischen dem Kondensator (2) und dem Vorfilter (4) liegt, und eine Kondenswasser-Bypassleitung (21) zwischen der Pumpe (3) und der Entsalzungseinheit (5) für das kondensierte Wasser vorhanden ist, die das Vorfilter (4) für das kondensierte Wasser umgeht, wobei ein Steuerventil (22) für die Bypassfließrate in der Kondenswasser-Bypassleitung (21) vorhanden ist, und eine Auf/Zu-Ventilsteuerung (23) an das Ventil (22) für die Bypassfließrate angeschlossen ist;
- wobei die Steuerung (23) so ausgebildet ist, daß sie von der Ermittlungseinrichtung (14) gesteuert wird, um den Öffnungsgrad des Ventils (22) und damit die Fließrate des Kühlwassers durch die Bypassleitung (21) einzustellen.

**17.** Verwendung nach Anspruch 15, mit einer SpeisewasserBypassleitung (24) zwischen der Reinigungseinheit (24) für das kondensierte Wasser und dem Speisewasserheizer (9) und einer Eisenelektrolysiervorrichtung (25) stromabwärts in bezug auf die Speisewasser-Bypassleitung (24), einer Elektrolyse-Spannungsquelle (26), die an die Eisenelektrolysiervorrichtung (25) angeschlossen ist, und einer Elektrolysierstromsteuerung (27), die mit der Spannungsquelle (26) verbunden ist, wodurch die Elektrolysierstromsteuerung (27) auf ein Steuersignal von der Ermittlungseinrichtung (14) so eingestellt wird, daß sie so arbeitet, daß sie den Elektrolysierstrom der Eisenelektrolysiervorrichtung (25) einstellt.

**Revendications**

**1.** Méthode empêchant l'échappement de substances radioactives dans l'eau de refroidissement d'une centrale nucléaire, dans laquelle, après le chargement d'un barreau de combustible neuf dans un réacteur nucléaire de la centrale, on injecte du fer dans l'eau de refroidissement de la centrale de façon à former une couche d'oxyde de fer sur les surfaces de gainage du combustible ; où, une fois que la couche d'oxyde de fer a atteint un taux de recouvrement de 100 %, la cadence d'injection du fer est contrôlée de telle sorte que le rapport de concentration molaire Fe/Ni dans l'eau de refroidissement se situe approximativement dans une gamme de 2 à 10.

**2.** Méthode conforme à la revendication 1, où la couche d'oxyde de fer est formée par l'injection d'ions de fer.

**3.** Méthode conforme à la revendication 1, où la couche d'oxyde de fer est formée par l'injection de dépôt de fer.

**4.** Méthode conforme à l'une ou l'autre des revendications qui précèdent, où, avant que ladite couche d'oxyde de fer ne recouvre les surfaces de gainage du combustible à un taux de recouvrement de 100 %, la concentration du fer dans l'eau de refroidissement est contrôlée à une valeur constante qui est la concentration maximale admise dans les conditions de service de la centrale nucléaire.

**5.** Méthode conforme à la revendication 4, où le rapport de concentration molaire Fe/Ni est contrôlé de façon à être d'environ 2 immédiatement après que la couche d'oxyde de fer recouvre la surface de gaînage du combustible à un taux de recouvrement de 100 %.

**6.** Méthode conforme à l'une ou l'autre des revendications qui précèdent, où :
la concentration du fer dans l'eau de refroidissement est mesurée ;
un rapport de recouvrement (%) de ladite couche d'oxyde de fer sur lesdites surfaces de gaînage du combustible est obtenu par les équations suivantes (i) et (ii), où K est un coefficient de vitesse de dépôt, Q est le flux calorifique d'un barreau de combustible, C est la concentration de fer, t est le temps de fonctionnement, L est la chaleur latente de vaporisation, W est la quantité de fer adhérant à la surface de gaînage du combustible, et $W_O$ est une valeur de consigne de quantité de fer adhérant à la surface de gaînage du combustible.

$$W = K \cdot Q \cdot C \cdot t/L \qquad (i)$$
rapport de recouvrement (%) $= (W/W_0) \times 100 \qquad (ii)$

et la formation de la couche d'oxyde de fer sur la surface de gaînage du combustible est confirmée sur la base du rapport de recouvrement, et un processus d'oxydation est terminé lorsque le taux de recouvrement de la couche d'oxyde de fer atteint 100 %.

7. Méthode conforme à l'une ou l'autre des revendications qui précèdent, où le rapport de concentration molaire Fe/Ni est contrôlé dans une gamme d'environ 4 à 6.

8. Méthode conforme à l'une ou l'autre des revendications qui précèdent, où la concentration de fer dans l'eau de refroidissement est contrôlée par un contrôle du débit de l'eau de refroidissement dans une ligne de contournement d'eau condensée.

9. Méthode conforme à l'une ou l'autre des revendications 1 à 7 incluse, où la concentration du fer dans l'eau de refroidissement est contrôlée par le contrôle d'un courant d'électrolyse du fer.

10. Méthode conforme à l'une ou l'autre des revendications qui précèdent, où la quantité totale de fer adhérant à ladite surface de gaînage est prédéterminée à partir du fonctionnement précédent de la centrale nucléaire.

11. Méthode conforme à l'une ou l'autre des revendications 1 à 9 incluse, où l'observation visuelle de l'adhérence du fer est utilisée pour déterminer la quantité de fer adhérant à la surface de gaînage du combustible.

12. Méthode conforme à l'une ou l'autre des revendications 1 à 9 incluse, où un signal émis par un capteur qui mesure des quantités physiques représentant la quantité de fer adhérant à la surface de gaînage du combustible est utilisé pour déterminer la quantité de fer adhérant à la surface de gaînage du combustible.

13. Appareil empéchant l'échappement de substances radioactives dans l'eau de refroidissement d'une centrale nucléaire, comportant :
    un moyen (13) de détecter la quantité de fer et la quantité de nickel présentes dans l'eau de refroidissement de la centrale ;
    un moyen (14) d'évaluer la quantité totale de fer adhérant aux surfaces de gaînage du combustible de la centrale sur la base de la quantité de fer présente dans l'eau de refroidissement, et
    un moyen (6,7) d'injecter du fer dans l'eau de refroidissement, le moyen d'injection de fer étant contrôlé sur la base de signaux représentant les quantités de fer et de nickel présentes dans l'eau de refroidissement et la quantité de fer adhérant aux surfaces de gaînage du combustible.

14. Appareil conforme à la revendication 13, où le moyen de détection (13) se trouve en aval du moyen d'injection (6,7) dans la trajectoire d'écoulement de l'eau de refroidissement dans le réacteur.

15. Utilisation d'un appareil conforme à la revendication 13 ou à la revendication 14 dans une centrale nucléaire, la centrale nucléaire comportant :
    un réacteur nucléaire, une turbine à vapeur (1), un condenseur (2), un épurateur d'eau condensée (4,5), un réchauffeur d'eau alimentaire (9,11) et un système de recirculation ;
    où le moyen de détection (13) se trouve en aval du réchauffeur d'eau alimentaire (9,11), et le moyen d'injection (6,7) se trouve en aval de l'épurateur d'eau (4,5).

16. Utilisation conforme à la revendication 15, où l'épurateur d'eau condensée est constitué d'un préfiltre à eau condensée (4) et d'un dessaleur d'eau condensée (5) ; il y a une pompe (3) entre le condenseur (2) et le préfiltre (4), et il y a une ligne de contournement d'eau condensée (21) entre la pompe (3) et le dessaleur d'eau condensée (5) qui contourne le préfiltre à eau condensée (4), une vanne de régulation de débit de contournement (22) étant installée dans la ligne de contournement d'eau (21), et un contrôleur d'ouverture/fermeture de vanne (22) étant raccordé à la vanne de régulation de débit de contournement (22) ;

où le contrôleur (23) est adapté pour être commandé par le moyen d'évaluation (14) de façon à contrôler le degré d'ouverture de la vanne (22) et, ainsi, à contrôler le débit d'eau de refroidissement dans la ligne de contournement (21).

17. Utilisation conforme à la revendication 15, ayant une ligne de contournement d'eau alimentaire (24) entre l'épurateur d'eau condensée (4) et le réchauffeur d'eau alimentaire (9), et un dispositif d'électrolyse du fer (25) en aval de la ligne de contournement d'eau alimentaire (24), une source de courant (26) pour l'électrolyse connectée au dispositif d'électrolyse du fer (25), et un régulateur de courant d'électrolyse (27) connecté à la source de courant (26), grâce auquel, en réponse à un signal de commande émis par le moyen d'évaluation (14), le régulateur de courant d'électrolyse (27) est adapté pour contrôler le courant d'électrolyse du dispositif d'électrolyse du fer (25).

FIG. 1

FIG. 2

FIG. 3

Flowchart:

PLANT DATA

↓

CONCENTRATION, MEASURING INTERVAL, AND FLOW RATE OF Fe, Ni, Co IN FEED WATER

↓

ESTIMATION OF Fe, Ni, Co AMOUNT ADHERED ON FUEL CLADDING SURFACE

↓

IS Fe AMOUNT ADHERED ON FUEL CLADDING SURFACE MORE THAN SETPOINT VALUE ?

— NO → Fe CONCENTRATION IN FEED WATER AT SETPOINT UPPER LIMIT VALUE

↓ YES

Fe/Ni MOLAR CONCENTRATION RATIO ≥ 2 ?

— NO →

↓ YES

IS OPERATION CYCLE FINISHED ?

— NO → Fe CONCENTRATION ACCORDING TO Ni, Co CONCENTRATION IN FEED WATER

↓ YES

CORRECTION OF AMOUNT ADHERED ON FUEL CLADDING SURFACE

## FIG. 4

## FIG. 5

FIG. 6

Fe, Ni CONCENTRATION
IN FEED WATER

FIG. 7

Fe, Ni CONCENTRATION
IN FEED WATER